# EUROPEAN PATENT SPECIFICATION

(11) **EP 2 736 153 B1**
(45) Date of publication and mention of the grant of the patent: **08.04.2020**
(21) Application number: 13192502.6
(22) Date of filing: 12.11.2013
(51) Int. Cl.: H02K 11/40

(54) **Motor and electric apparatus equipped with the motor**
Motor und mit dem Motor ausgerüstete elektrische Vorrichtung
Moteur et appareil électrique équipé du moteur

(30) Priority: 22.11.2012 JP 2012256184
(43) Date of publication of application: 28.05.2014
(73) Proprietor: Panasonic Corporation, Kadoma-shi Osaka 571-8501 (JP)
(72) Inventor: Watanabe, Akihiko, Osaka-shi, Osaka 540-6207 (JP); Mizukami, Hirofumi, Osaka-shi, Osaka 540-6207 (JP)
(74) Representative: SSM Sandmair

(56) References cited:
- WO-A1-2011/141957
- JP-A- 2010 158 152
- US-A1- 2012 112 588

## Description

### TECHNICAL FIELD

The present invention relates to a motor and an electric apparatus equipped with the motor, and more particularly, to an improvement of the motor to suppress development of electrolytic corrosion in a bearing.

### BACKGROUND ART

A method of driving motors employed recently in a growing number is inverter control that uses pulse width modulation method (hereinafter referred to as "PWM method"). In the case of inverter control using the PWM method, an electric potential at a neutral point of a winding does not stay at 0 (zero) volt. As a result, a difference in the electric potential (hereinafter referred to as "shaft voltage") occurs between an outer ring and an inner ring of a bearing. The shaft voltage includes a high-frequency component attributed to switching operation. If the shaft voltage reaches a breakdown voltage of an oil film present in the bearing, a micro electric current flows inside the bearing. This flow of the micro electric current causes electrolytic corrosion in the bearing. When the electrolytic corrosion progresses, a phenomenon of wavy wear appears on the inner ring, the outer ring or balls of the bearing. The phenomenon of wavy wear, when developed, may make the bearing liable to produce abnormal noise. This abnormal noise becomes one of the main causes of troubles with the motor.

A power supply circuit used for a drive circuit that inverter-drives the motor with the PWM method, a primary circuit constituting the power supply circuit, and another circuit configured to establish grounding by electrically connecting the primary circuit to the earth are electrically isolated with respect to one another. The circuits that are configured to be electrically isolated from each other are called collectively as an inverter power supply circuit. Here, the drive circuit for executing inverter driving includes a control circuit and the like.

The following measures have hitherto been considered to suppress the electrolytic corrosion:
(1) to maintain an electrical continuity between the inner ring and the outer ring of the bearing;
(2) to maintain electrical insulation between the inner ring and the outer ring of the bearing; and
(3) to reduce the shaft voltage.

One specific method of achieving the above item (1) is to replace a lubricant used in the bearing with another type having electrical conductivity. However, lubricants having electrical conductivity pose such problems that the conductivity deteriorates with the passage of time, and they lack reliability to sliding movement.

As another specific method of achieving the above item (1), it is conceivable to establish the electrical continuity by disposing a brush on a rotary shaft. This method poses such problems as producing dust from abrasion of the brush, and needing an extra space for placing the brush.

A specific method of achieving the above item (2) is to replace steel balls disposed inside of the bearing with non-conductive ceramic balls. This method has a very high effect of suppressing formation of electrolytic corrosion. However, it is not practical to adopt this method for general-purpose motors because of a disadvantage of high costs.

A conventional method disclosed in Japanese Patent Unexamined Publication No. 2007-159302 is also known as a specific method of achieving the above item (3). That is, a stator core and a conductive metal bracket are electrically shorted. Since the electrostatic capacitance changes when the stator core and the metal bracket are electrically shorted, the shaft voltage can be reduced.

There are also other conventional methods like the one disclosed in Japanese Patent Unexamined Publication No. 2004-229429. This conventional method suppresses development of electrolytic corrosion inside the bearing provided in the motor. It discloses a structure in which a stator core and the like of the motor are electrically connected to the earth ground, as one of the conventional methods.

There is still another conventional method like the one shown in Japanese Patent Unexamined Publication No. 2010-158152. This conventional method is to provide a dielectric layer in a rotary body. The dielectric layer provided in the rotary body can reduce the shaft voltage since the dielectric layer changes an electrostatic capacitance.

However, the conventional method shown in Japanese Patent Unexamined Publication No. 2007-159302 is to electrically short the stator core to the metal bracket. It is not possible in this method to adjust the electrostatic capacitance. In addition, it has had a problem that the shaft voltage rises depending on a material of a magnet used for the rotor and a structure of the rotor.

The conventional method like that shown in Japanese Patent Unexamined Publication No. 2004-229429 is to increase the electrostatic capacitance. In this method, it is necessary to maintain a balance of the electrostatic capacitance under a condition of high electric potential between an inner ring and an outer ring of the bearing at all times. The following concern is conceivable in this structure. That is, there are cases in which the balance of the electrostatic capacitance comes undone due to an environment in which the motor is used, a variation in accuracy resulting from assembling of the stator and the rotor, and the like reasons. In such cases, the shaft voltage has rather become higher, thereby giving rise to a problem of making it likely to develop electrolytic corrosion.

Documents WO 2011/141957 A1, US 2012 112588 A1 as well as JP 2010 158152 A each describe motors in which the bracket fixing the bearings on the output shaft side and the bracket on the side opposite the output shaft side are electrically connected to each other by an electrically conductive pin integrally moulded in the insulating resin of the stator core.

### SUMMARY OF THE INVENTION

A motor of the present invention is devised in consideration of the above problems, and it is thus an object of this invention to provide the motor with an advantage of suppressing development of electrolytic corrosion in a bearing, and also to provide an electric apparatus equipped with the same motor.

The motor of the present invention comprises a stator, a rotor, a pair of bearings, a pair of brackets, and a conductive member.

The stator has a winding, and a stator core on which the winding is wound. The rotor has a rotary body including a permanent magnet disposed in a circumferential direction and confronting the stator, and a shaft penetrating through an axial center of the rotary body and fixed to the rotary body. The pair of bearings supports the shaft. The pair of brackets has electrical conductivity, and holds the bearings fixed thereto. The conductive member electrically connects the pair of brackets.

Electrostatic capacitance A is defined as an electrostatic capacitance formed between the shaft and an outermost surface to be the farthest outer periphery from the axial center of the rotary body. Electrostatic capacitance B is defined as an electrostatic capacitance formed between the stator core and the conductive member. There is a relation of 0.50A ≤ B ≤ 3.08A between electrostatic capacitances A and B at a measuring frequency of 10 kHz.

According to the present invention, the conductive member is a lead wire including a metal wire and a film coating of an insulating material with which the metal wire is covered.

The electric apparatus of the present invention comprises the motor described above, and a driving unit for driving the motor.

### BRIEF DESCRIPTION OF DRAWINGS

Fig. 1 is a structural drawing showing a partially sectioned view and enlarged main parts of a motor according to first exemplary embodiment of the present invention.
Fig. 2 is a perspective view showing a structure of a rotary body used in the motor according to the first exemplary embodiment.
Fig. 3 is a perspective view showing a structure of another rotary body used in the motor according to the first exemplary embodiment.
Fig. 4 is a perspective view showing a structure of still another rotary body used in the motor according to the first exemplary embodiment.
Fig. 5 is an explanatory drawing showing a method for measuring an electrostatic capacitance provided in a rotary body used for the motor according to the first exemplary embodiment.
Fig. 6 is a structural drawing showing a partially sectioned view of a stator assembly that constitutes the motor according to the first exemplary embodiment.
Fig. 7 is an explanatory drawing showing a method for measuring an electrostatic capacitance provided in the stator assembly that constitutes the motor according to the first exemplary embodiment.
Fig. 8 is an explanatory drawing showing a method for measuring a shaft voltage appearing in the motor according to the first exemplary embodiment.
Fig. 9 is an explanatory drawing showing another method for measuring the shaft voltage appearing in the motor according to the first exemplary embodiment.
Fig. 10 is a waveform chart showing a completely distorted wave, as one example of the voltage waveform measured with the motor according to the first exemplary embodiment.
Fig. 11 is a waveform chart showing a partially distorted wave, as one example of the voltage waveform measured with the motor according to the first exemplary embodiment.
Fig. 12 is a waveform chart showing an undistorted wave, as one example of the voltage waveform measured with the motor according to the first exemplary embodiment.
Fig. 13 is a waveform chart showing an example of comparative wave for comparison with the voltage waveforms shown from Fig. 10 through Fig. 12.
Fig. 14 is a comparison table showing an evaluation result of first embodied samples according to the first exemplary embodiment.
Fig. 15 is a structural drawing of an indoor unit of an air conditioner, representing an electric apparatus equipped with a motor, according to second exemplary embodiment of the present invention.
Fig. 16 is a structural drawing of an outdoor unit of the air conditioner, also representing an electric apparatus equipped with a motor, according to third exemplary embodiment of the present invention.
Fig. 17 is a structural drawing of a water heater, representing an electric apparatus equipped with a motor, according to fourth exemplary embodiment of the present invention.
Fig. 18 is a structural drawing of an air cleaner, representing an electric apparatus equipped with a motor, according to fifth exemplary embodiment of the present invention.

### DESCRIPTION OF EMBODIMENTS

The present invention serves to suppress development of electrolytic corrosion in a bearing of a motor as will be described in the following exemplary embodiments. In addition, the present invention can provide an electric apparatus that is explained later and equipped with the motor having the advantage of suppressing development of electrolytic corrosion in the bearing.

First, it should be known that conventional motors have the following matter of concern.

That is, the above-described inverter power supply circuit comprises a power supply circuit used for a drive circuit, a primary circuit constituting the power supply circuit, and another circuit configured to establish grounding by electrically connecting the primary circuit to the earth, all of which are electrically isolated from each other.

It is therefore conceivable in the light of specifications and characteristics of the motor that adoption of the inverter power supply circuit in combination with such a structure that the motor is grounded by electrically connecting a stator core and the like to the earth gives rise to a new problem.

Referring now to the accompanying drawings, description will be provided hereinafter of certain exemplary embodiments of the present invention which can especially exhibit remarkable advantages.

It is to be noted that the exemplary embodiments illustrated below are merely examples that embody the present invention, and they are not intended to limit the technological scope of the present invention.

### FIRST EXEMPLARY EMBODIMENT

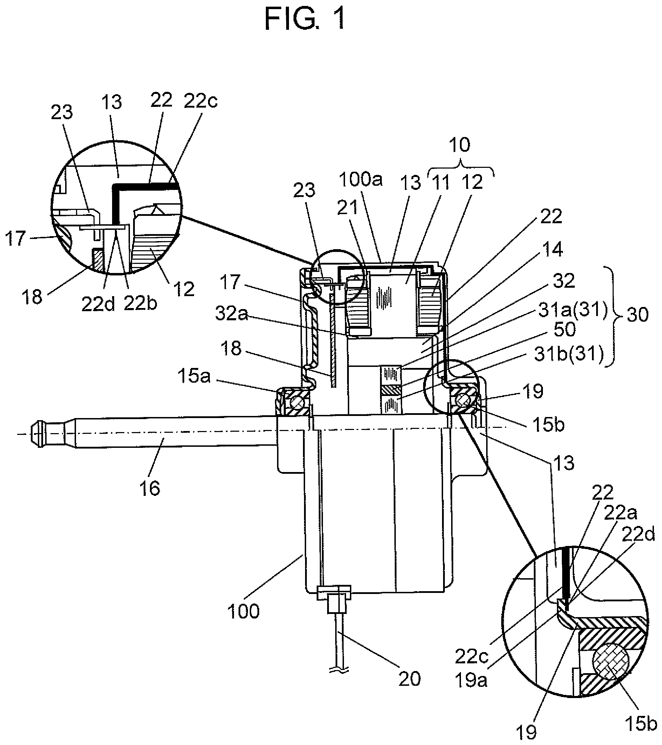

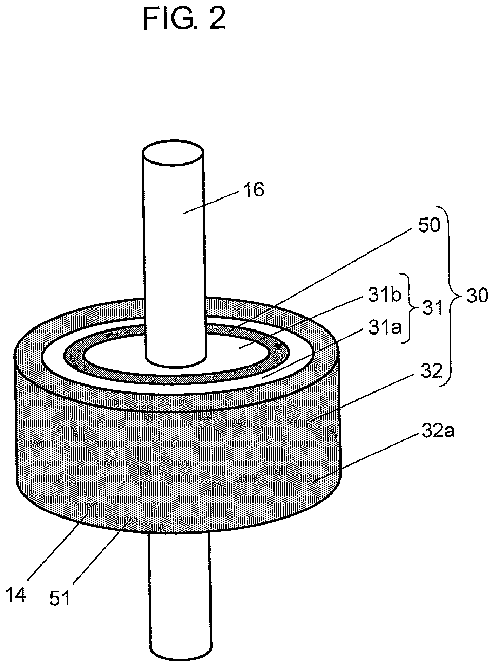

Fig. 1 is a structural drawing showing a partially sectioned view and enlarged parts of a motor according to the first exemplary embodiment of this invention. Fig. 2 is a perspective view showing a structure of a rotary body used in the motor of the first embodiment.

In this embodiment, description is provided of an example of motor mounted to an air conditioner that represents an electric apparatus. This motor is a brushless motor for driving a ventilation fan. The motor is an inner-rotor type motor. The motor of the inner-rotor type motor has a rotor disposed to an inner peripheral side of a stator in a freely rotatable manner.

As shown in Fig. 1, brushless motor 100, or the motor in the first embodiment of this invention comprises stator 10, rotor 14, a pair of bearings 15a and 15b, a pair of brackets 17 and 19, and lead wire 22 serving as a conductive member.

Stator 10 has stator winding 12, or a coil, and stator core 11 on which stator winding 12 is wound. Rotor 14 has rotary body 30 and shaft 16. Rotary body 30 includes ferrite resin magnet 32, which is a permanent magnet disposed in a circumferential direction and confronting stator 10. Shaft 16 penetrates through an axial center of rotary body 30, and it is fixed to rotary body 30. The pair of bearings 15a and 15b supports shaft 16. This pair of bearings 15a and 15b is fixed to the pair of brackets 17 and 19. The pair of brackets 17 and 19 has electrical conductivity. Lead wire 22 serving as the conductive member electrically connects the pair of brackets 17 and 19.

Electrostatic capacitance A denotes an electrostatic capacitance formed between shaft 16 and outermost surface 32a at the farthest outer periphery from the axial center of rotary body 30, as shown in Fig. 2. Electrostatic capacitance B denotes an electrostatic capacitance formed between stator core 11 and lead wire 22, or the conductive member, as shown in Fig. 1. There is a relation of 0.50A ≤ B ≤ 3.08A between electrostatic capacitances A and B at a measuring frequency of 10 kHz.

A more preferable relation between electrostatic capacitances A and B is 0.62A < B ≤ 2.07A at the measuring frequency of 10 kHz.

The structure illustrated above, when adopted, can maintain balance of electrical potentials so as to equalize them between inner ring sides and outer ring sides of bearings 15a and 15b at high frequencies. As a result, the shaft voltage can be suppressed without being influenced by an environment and the other factors under which brushless motor 100 is used.

Here, it is preferable to use 10 kHz as the measuring frequency. The reason of this is because brushless motors that are driven by inverters using the PWM method in recent years, including brushless motor 100, use a driving frequency of generally 10 kHz.

If electrostatic capacitance B becomes larger than 3.08 times electrostatic capacitance A, the shaft voltage increases, and a dielectric breakdown occurs through oil films present inside bearings 15a and 15b. Even if electrostatic capacitance B becomes smaller than 0.5 times electrostatic capacitance A, the shaft voltage also increases, and a dielectric breakdown occurs through the oil films present inside bearings 15a and 15b.

A more preferable range of electrostatic capacitance B is between a value not smaller than 0.62 times electrostatic capacitance A and another value not larger than 2.07 times electrostatic capacitance A. Electrostatic capacitance B, when maintained within this range, does not cause a dielectric breakdown of the oil films present in bearings 15a and 15b. It can also prevent the voltage waveform of the shaft voltage from becoming distorted.

The conductive member used in brushless motor 100, i.e., the motor of the first embodiment of this invention, comprises lead wire 22 including metal wire 22d and film coating 22c of an insulating material with which metal wire 22d is covered. Such a structure can help ease adjustment of an electrical potential of the outer-ring sides of bearings 15a and 15b at a high frequency by changing the material used to form film coating 22c of lead wire 22, or by adjusting a thickness of film coating 22c of lead wire 22.

Here, a conductive tape and a metal plate are also available for use as the conductive member besides lead wire 22.

Description is provided in more detail by referring to Fig. 1.

Stator winding 12 is wound on stator core 11, as shown in Fig. 1. Stator core 11 has resin 21 that is an insulator for insulating between stator core 11 and stator winding 12. Stator core 11 is molded with insulation resin 13, or a molding material, together with other members to be fixed. These members are molded with insulation resin 13 into an integral structure. As a result, stator 10 having an outer shape of substantially cylindrical configuration is completed.

Rotor 14 is inserted in stator 10 with a gap between them. As shown in Fig. 2, rotor 14 comprises rotary body 30 and shaft 16. Rotary body 30 has a disc-like shape including rotor core 31. Shaft 16 penetrates through the axial center of rotary body 30, and is fixed to rotary body 30. Rotary body 30 has ferrite resin magnet 32, which is a permanent magnet disposed in a circumferential direction in a manner to confront an inner peripheral side of stator 10.

Rotary body 30 includes outer core 31a, dielectric layer 50 and inner core 31b, which are arranged in this order from ferrite resin magnet 32 at the outermost side toward shaft 16 at the interior side. Outer core 31a constitutes an outer portion of rotor core 31. Inner core 31b constitutes an inner portion of rotor core 31. In other words, rotary body 30 in the first embodiment has rotor core 31, dielectric layer 50 and ferrite resin magnet 32, which are integrally molded together. As described, rotary body 30 is so disposed that its outer peripheral side confronts the inner peripheral side of stator 10.

Two bearings 15a and 15b are mounted to shaft 16 of rotor 14 for supporting shaft 16. Bearings 15a and 15b are cylindrically-shaped bearings, each of which includes a plurality of steel balls. An inner ring side of each of bearings 15a and 15b is fixed to shaft 16. One end of shaft 16 protruding from a main body of the brushless motor is defined as an output-shaft side, and the other end is defined as an anti-output-shaft side. The output-shaft side and the anti-output-shaft side are illustrated on the left side and the right side respectively in Fig. 1. Shaft 16 is supported by bearing 15a at the output-shaft side and bearing 15b at the anti-output-shaft side.

Each of metal brackets 17 and 19 has electrical conductivity. The outer ring sides of bearings 15a and 15b are fixed to corresponding metal brackets 17 and 19. In Fig. 1, bearing 15a at the output-shaft side is fixed to bracket 17, and bearing 15b at the anti-output-shaft side is fixed to bracket 19.

Rotor 14 becomes freely rotatable by virtue of this structure since shaft 16 is supported with two bearings 15a and 15b.

Brushless motor 100 is provided internally with printed circuit board 18. Printed circuit board 18 has a drive circuit including a control circuit mounted on it. Bracket 17 is press-fitted to stator 10 after printed circuit board 18 is built in a space inside of bracket 19. Brushless motor 100 is thus made up.

Printed circuit board 18 is connected with connecting wires 20. Connecting wires 20 include lead wires for supplying printed circuit board 18 with power supply voltage Vdc for the stator winding, power supply voltage Vcc for the control circuit, and control voltage Vsp for controlling a rotation speed. Connecting wires 20 also include a grounding wire of the control circuit.

A zero potential point on printed circuit board 18, on which the drive circuit is mounted, is isolated from both the earth ground and a primary side (mains power) circuit. The zero potential point therefore remains in a floating condition with respect to electric potentials of the earth ground and the primary side (mains power) circuit. The zero potential point denotes a wiring conductor carrying an electric potential of 0 volt which becomes a reference potential on printed circuit board 18. The zero potential point generally refers to a grounding conductor, which is called the earth ground. The grounding wire included in connecting wires 20 is connected to this zero potential point, that is, the grounding conductor.

In other words, the drive circuit is mounted on printed circuit board 18. A power supply circuit for supplying a power supply voltage to stator winding 12, another power supply circuit for supplying the power supply voltage to the control circuit, a lead wire for applying a control voltage, the grounding wire, and the like connected with printed circuit board 18 are collectively called a power supply circuit.

A primary side (mains power) circuit corresponding to the power supply circuit for supplying the power supply voltage to stator winding 12, and another primary side (mains power) circuit corresponding to the power supply circuit for supplying the power supply voltage to the control circuit are called a primary circuit.

A circuit that electrically connects the primary circuit to the earth for grounding, and another circuit independent of this circuit and for grounding to the earth are called an earth-grounding circuit.

The power supply circuit, the primary circuit and the earth-grounding circuit are electrically isolated with respect to one another.

In other words, the drive circuit mounted on printed circuit board 18 is in a condition isolated electrically from the electric potential of the primary circuit as well as the electric potential of the earth ground. The electric potential therefore stays in a floating condition. This condition is also expressed as a condition that the electric potential is floated, as is well known. In addition, the power supply circuit for supplying the power supply voltage to stator winding 12 connected with printed circuit board 18 and the power supply circuit for supplying the power supply voltage to the control circuit are also called floating power supplies, as is also well known.

The power supply voltages and a control signal are supplied individually to brushless motor 100 having the above structure through connecting wires 20. A drive current to be supplied to stator winding 12 is produced by the drive circuit mounted on printed circuit board 18 according to the individually supplied power supply voltages and the control signal. The drive current supplied to stator winding 12 generates a magnetic field from stator core 11. The magnetic field generated from stator core 11 and magnetic field produced by ferrite resin magnet 32 produce an attractive force and a repulsive force depending on polarities of these magnetic fields. Rotor 14 rotates about shaft 16 by the effect of these attractive and repulsive forces.

In addition, lead wire 22 serving as the conductive member is electrically connected to bracket 19 in advance. That is, one end portion 22a of lead wire 22 is connected to flange portion 19a of bracket 19, as shown in the enlarged main part in Fig. 1. Lead wire 22 is disposed inside insulation resin 13. Lead wire 22 is molded integrally with insulation resin 13 in the like manner as with bracket 19.

Lead wire 22 is disposed inside insulation resin 13 located within brushless motor 100. The structure thus composed can prevent lead wire 22 from a force exerted on it from the outside of brushless motor 100. This structure can hence provide an electrical connection of high reliability against the condition of environment where brushless motor 100 is used as well as stresses imposed from the outside of brushless motor 100.

In other words, brushless motor 100, i.e., the motor of the first embodiment of this invention is so constructed that at least one of the pair of brackets 17 and 19 is molded integrally with stator core 11 by insulation resin 13.

It is also possible to stabilize the electrostatic capacitance formed between lead wire 22 and stator core 11 by having lead wire 22 in contact closely with stator core 11. Besides, the electrostatic capacitance can be adjusted easily with the material and the thickness of film coating 22c used for lead wire 22.

On the other hand, if lead wire 22 is located outside of brushless motor 100, lead wire 22 can be moved by a force exerted on it from the outside of brushless motor 100. When lead wire 22 is moved, the electrostatic capacitance formed between lead wire 22 and stator core 11 changes, occurrence of which is not desirable.

In essence, lead wire 22 serving as the conductive member used in brushless motor 100 is in contact with stator core 11, and molded integrally with insulation resin 13, according to the first embodiment of this invention.

According to this structure, the electrostatic capacitance formed between lead wire 22 and stator core 11 can be stabilized by making lead wire 22 in close contact with stator core 11. In addition, the electrostatic capacitance can be adjusted easily with the material and the thickness of film coating 22c used for lead wire 22.

Lead wire 22 is routed within insulation resin 13 in a direction orthogonal to the axial center of shaft 16 from flange portion 19a toward a position at side face 100a of brushless motor 100, as shown in Fig. 1. Lead wire 22 routed to the vicinity of side face 100a is further extended toward the output-shaft side of the brushless motor along a direction parallel to the axial center of shaft 16. As shown in the enlarged part, another end portion 22b of lead wire 22 is exposed from an end surface at the output-shaft side of insulation resin 13. Conducting pin 23 is connected to end portion 22b for electrical connection of lead wire 22 with bracket 17.

In this structure, conducting pin 23 comes into contact with bracket 17 when bracket 17 is press-fitted to stator 10. The electrical connection can be thus ensured between conducting pin 23 and bracket 17.

An insulated condition between two brackets 17 and 19 and stator cores 11 is maintained in this structure by insulation resin 13. In addition, the two brackets, namely brackets 17 and 19 are electrically connected through conducting pin 23.

It becomes possible by adopting the above structure to make electrical connection between two electrically conductive brackets 17 and 19 through a connecting pin or conducting pin 23 within brushless motor 100. This structure can hence ensure the electrical connection of high reliability against the condition of the environment in which brushless motor 100 is used and the stresses imposed from the outside of brushless motor 100.In this embodiment, a cross-linked polyethylene wire having nominal cross-sectional area of 0.5 mm² and film coating 22c of 0.3 mm in thickness is used for lead wire 22 as a conductive member. Lead wire 22 is held in contact with stator core 11, and molded integrally by insulation resin 13.

Rotary body 30 shown in Fig. 2 uses a poly-butylene terephthalate (hereinafter referred to as "PBT") resin containing 20% of glass fiber as dielectric layer 50. In rotary body 30, the PBT resin that forms dielectric layer 50 has a thickness of 2.5 mm in a radial direction of the axial center. The following relation can be established by using rotary body 30 provided with this dielectric layer 50.

That is, electrostatic capacitance A is a capacitance formed between shaft 16 and outermost surface 32a at the farthest outer periphery from the axial center of rotary body 30. Electrostatic capacitance B is a capacitance formed between stator core 11 and lead wire 22 that is the conductive member.

The relation between electrostatic capacitances A and B is 0.50A ≤ B ≤ 3.08A at the measuring frequency of 10 kHz.

A more preferable relation between electrostatic capacitances A and B is 0.62A ≤ B ≤ 2.07A at the same measuring frequency of 10 kHz.

Both brackets, i.e., brackets 17 and 19, carry same potentials when provided with any of these relations. The shaft voltage can be reduced by having brackets 17 and 19 carry the same potentials and suppressing unbalance in the electrical potentials. A dielectric breakdown through the oil films present in bearings 15a and 15b is hence prevented.

Furthermore, the electrostatic capacitance can be adjusted by changing the thickness or the material of dielectric layer 50. As a specific example, a dielectric constant of the insulation resin that forms dielectric layer 50 is adjusted. The thickness of the insulation resin that forms dielectric layer 50, or a distance between electrodes, is adjusted. Or, an area of the electrodes of the insulation resin that forms dielectric layer 50 is adjusted. Therefore, the electrostatic capacitance can be adjusted easily by dielectric layer 50.

In other words, rotary body 30 used in brushless motor 100 of this embodiment of the invention has a structure comprising dielectric layer 50 between shaft 16 and outer peripheral portion 51 having a peripheral surface that is parallel to a direction of the axial center of rotary body 30 and forms an outer periphery of rotary body 30.

The structure constructed as above can help adjust easily an electrical potential of the inner ring side of bearings 15a and 15b at high frequencies by changing the material and the thickness of dielectric layer 50 and adjusting the electrostatic capacitance.

Description is provided hereinafter in more specific about the first exemplary embodiment of this invention by presenting embodied samples. Note that the first exemplary embodiment of this invention is not limited to the following embodied samples, and that the invention is not restricted by these embodied samples unless the gist and meaning of the invention is altered.

### (Embodied Sample 1)

Referring to the accompanying drawings, description is provided of embodied sample 1 as concrete examples of the first exemplary embodiment of the present invention.

Fig. 2 is a perspective view showing a structure of the rotary body used in the motor of the first exemplary embodiment. As shown in Fig. 2, rotary body 30 is provided with dielectric layer 50 between shaft 16 and outer peripheral portion 51 having a peripheral surface that is parallel to a direction of the axial center of rotary body 30 and forms an outer periphery of rotary body 30.

Rotary body 30 of embodied sample 1 has rotor core 31 fixed around shaft 16 in a direction along the axial center of shaft 16. The axial center of shaft 16 is coaxial with that of rotary body 30 since shaft 16 penetrates through the axial center of rotor core 31. Rotor core 31 has outer peripheral portion 51 on its outer periphery that is parallel to the direction of the axial center of shaft 16. In other words, rotary body 30 is provided with ferrite resin magnet 32 along the direction of the axial center of rotary body 30, as outer peripheral portion 51 of rotor core 31. Rotor core 31 includes dielectric layer 50 between inner core 31b fixed to shaft 16 and outer core 31a in contact to outer peripheral portion 51. A PBT resin containing 20% of glass fiber is used for dielectric layer 50. The PBT resin has a thickness of 2.5 mm in the radial direction.

Rotary body 30 of the above structure was produced and obtained as rotary body sample A1, which has electrostatic capacitance A of 6.5 pF formed between shaft 16 and outermost surface 32a of rotary body 30.

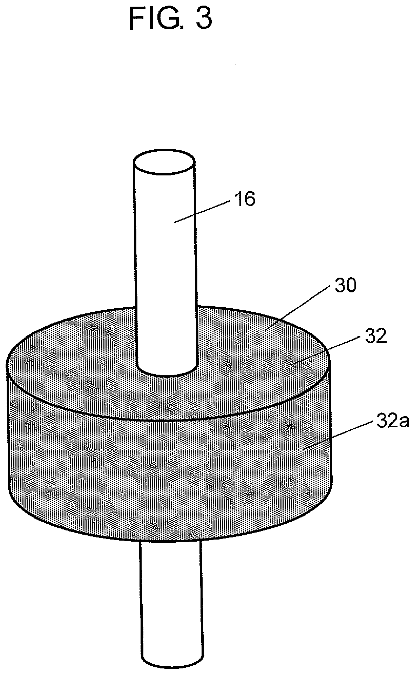

Another rotary body 30 in this embodied sample 1 has ferrite resin magnet 32 fixed directly to an outer periphery of shaft 16 along the direction of the axial center of shaft 16, as shown next in Fig. 3.

Rotary body 30 of this structure was produced and obtained as rotary body sample A2, which has electrostatic capacitance A of 15 pF formed between shaft 16 and outermost surface 32a of rotary body 30.

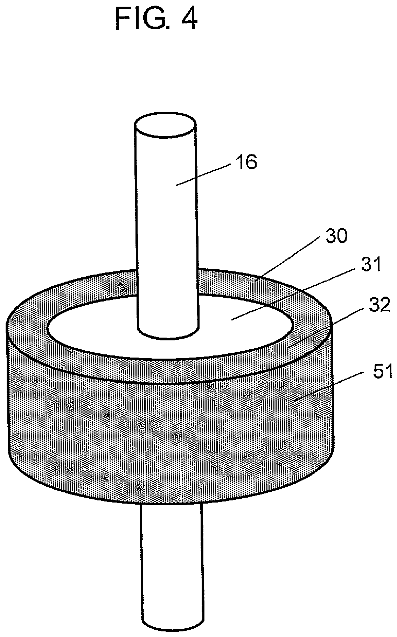

Next, still another rotary body 30 in this embodied sample 1 has rotor core 31 fixed directly to the outer periphery of shaft 16 along the direction of the axial center of shaft 16, as shown in Fig. 4. Rotor core 31 has outer peripheral portion 51 on its outer periphery along the direction of the axial center of shaft 16. In other words, rotary body 30 is provided with ferrite resin magnet 32, as outer peripheral portion 51 of rotor core 31 along the axial direction of rotary body 30.

Dimensions of the individual elements that compose rotary body 30 are as follows.

Firstly, a diameter of rotor core 31 is 25 mm. Ferrite resin magnet 32 that forms outer peripheral portion 51 disposed on the outer periphery of rotor core 31 has a wall thickness of 12.5 mm in the radial direction. Rotary body 30 of 50 mm in the diameter is made by combining these rotor core 31 and ferrite resin magnet 32.

Rotary body 30 of the above structure was produced and obtained as rotary body sample A3, which has electrostatic capacitance A of 32 pF formed between shaft 16 and outermost surface 32a of rotary body 30.

In addition, sample A4 having a dimensional ratio different from sample A3 was prepared. In sample A4, rotor core 31 has a diameter of 36 mm. Ferrite resin magnet 32 that forms outer peripheral portion 51 disposed on the outer periphery of rotor core 31 has a wall thickness of 7 mm in the radial direction. Rotary body 30 of 50 mm in the diameter is made by combining these rotor core 31 and ferrite resin magnet 32.

Rotary body 30 of the above structure was produced and obtained as rotary body sample A4, which has electrostatic capacitance A of 40 pF formed between shaft 16 and outermost surface 32a of rotary body 30.

Nylon-base ferrite resin magnets are used for samples A3 and A4. The samples A3 and A4 contain about 88 to 92 weight-% of ferrite magnet powder.

A method of measuring electrostatic capacitances formed in sample A1 to sample A4 is described next.

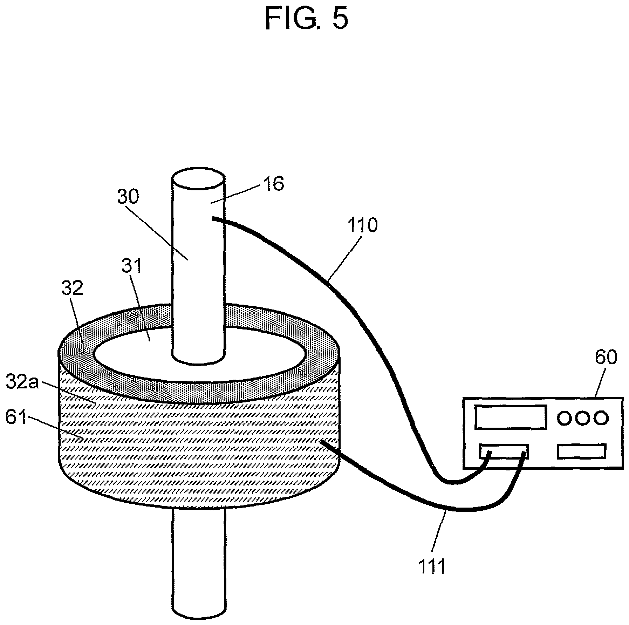

As shown in Fig. 5, measurement of the electrostatic capacitance of any of sample A1 to sample A4 is made by using LCR meter 60. The LCR meter 60 used here is Model ZM2353 in combination with Kelvin clip test leads Model 2325A manufactured by NF Corporation. Copper foil 61 is placed on outermost surface 32a of rotary body 30 when measuring the electrostatic capacitance by using LCR meter 60. Shaft 16 is fixed to a wooden board of 20 mm in thickness. For each of the samples, an electrostatic capacitance that appears between copper foil 61 and shaft 16 is measured with LCR meter 60.

The following conditions are used in the measurement of the electrostatic capacitance. A measuring frequency is 10 kHz. A measuring temperature is 20°C. A voltage level is 1V.

Described next pertains to stator assemblies which are combined with sample A1 to sample A4 according to the embodied sample 1.

Stator assemblies have electrostatic capacitances B. Stator assemblies make up sample B1 to sample B4, as will be described later.

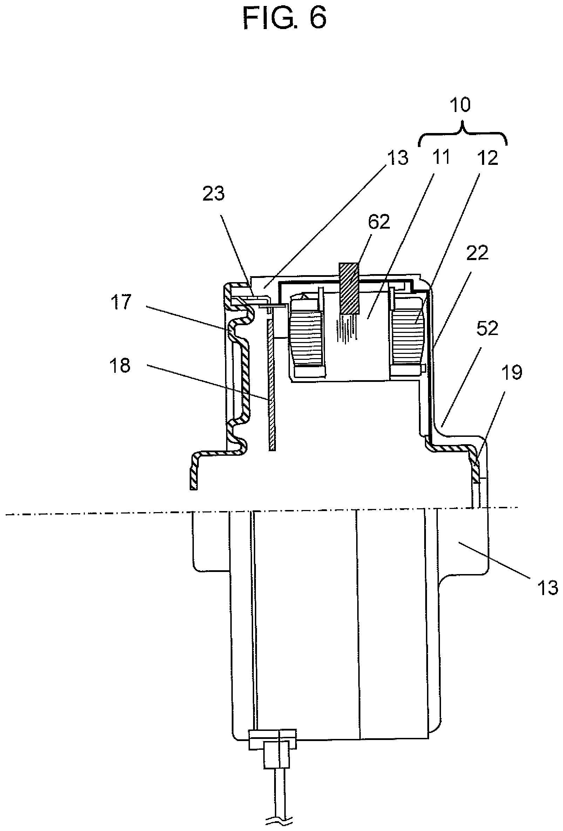

As shown in Fig. 6, the conductive member is lead wire 22 comprising a metal wire and a film coating as an insulating material covering the metal wire. In stator assembly 52, lead wire 22, or the conductive member, is in contact with stator core 11. Lead wire 22, or the conductive member, is formed integrally with stator core 11 by insulation resin 13.

Description is provided hereinafter of a concrete example.

In this embodied sample 1, stator assembly 52 designated as sample B1 uses a cross-linked polyethylene wire as lead wire 22 that is the conductive member. The cross-linked polyethylene wire comprises metal wire 22d having a nominal cross-sectional area of 0.5 mm², and film coating 22c having a thickness of 0.15 mm as an insulating material covering metal wire 22d. Lead wire 22 is in contact with stator core 11. Lead wire 22 is formed integrally with stator core 11 by insulation resin 13.

Stator assembly 52 of the above structure was produced and stator assembly sample B1 which has electrostatic capacitance B of 4 pF formed between stator core 11 and lead wires 22, or the conductive member was obtained.

Next, in this embodied sample 1, stator assembly 52 designated as sample B2 uses a cross-linked polyethylene wire as lead wire 22, or the conductive member. The cross-linked polyethylene wire comprises metal wire 22d having a nominal cross-sectional area of 0.5 mm², and film coating 22c having a thickness of 0.3 mm as an insulating material covering metal wire 22d. Lead wire 22 is in contact with stator core 11. Lead wire 22 is formed integrally with stator core 11 by insulation resin 13.

Stator assembly 52 of the above structure was produced and stator assembly sample B2 which has electrostatic capacitance B of 13 pF formed between stator core 11 and lead wires 22, or the conductive member was obtained.

Stator assembly 52 in this embodied sample 1 designated as sample B3 is produced next. In sample B3, lead wire 22 is disposed along an outer peripheral surface of insulation resin 13, after stator core 11 wound with stator winding 12 is molded integrally with insulation resin 13.

A cross-linked polyethylene wire is used for lead wire 22 as the conductive member. The cross-linked polyethylene wire comprises metal wire 22d having a nominal cross-sectional area of 0.5 mm², and film coating 22c having a thickness of 0.15 mm as an insulating material covering metal wire 22d.

Stator assembly 52 of the above structure was produced and stator assembly sample B3 which has electrostatic capacitance B of 20 pF formed between stator core 11 and lead wires 22, or the conductive member was obtained.

Stator assembly 52 in this embodied sample 1 designated as sample B4 was produced in the same manner. In sample B4, lead wire 22 is disposed along an outer peripheral surface of insulation resin 13, after stator core 11 wound with stator winding 12 is molded integrally with insulation resin 13.

A cross-linked polyethylene wire is used for lead wire 22 as the conductive member. The cross-linked polyethylene wire comprises metal wire 22d having a nominal cross-sectional area of 0.5 mm², and film coating 22c having a thickness of 0.3 mm as an insulating material covering metal wire 22d. A thermosetting resin of unsaturated polyester molding material (i.e., bulk molding compound, which is referred to hereinafter as "BMC") is used for the insulating material.

Stator assembly 52 of the above structure was produced and stator assembly sample B4 which has electrostatic capacitance B of 31 pF formed between stator core 11 and lead wires 22, or the conductive member was obtained.

Description is provided next of a method of measuring an electrostatic capacitance formed in each of sample B1 to sample B4.

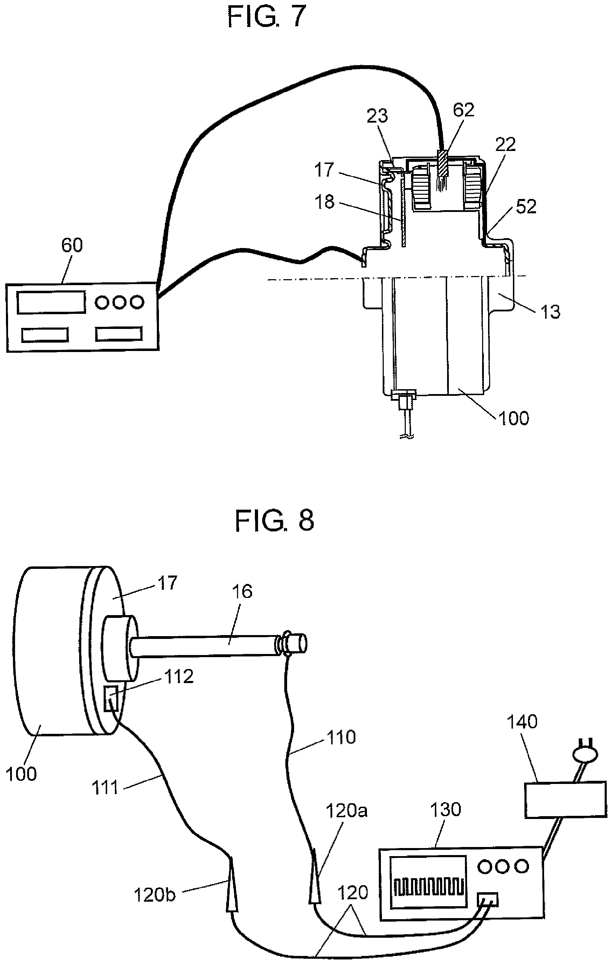

As shown in Fig. 7, measurement of the electrostatic capacitance of any of sample B1 to sample B4 is made by using LCR meter 60. When measuring the electrostatic capacitance, the rotor is taken out of the brushless motor as the motor. In the brushless motor from which the rotor is taken out, stator assembly 52 is constructed by making it into a state in which two electrically-connected brackets 17 and 19 are reattached to stator core 11 with lead wire 22.

The following conditions are used in the measurement of the electrostatic capacitance. A measuring frequency is 10 kHz. A measuring temperature is 20°C. A voltage level is IV.

Stator core connecting metal 62 and lead wire 22 need to be separated sufficiently when measuring the electrostatic capacitance in order to avoid an adverse influence on a result of the measurement.

For the measurement of the electrostatic capacitance, stator assembly 52 is used in a state that the rotor is taken out of the brushless motor, i.e., the motor, and two brackets 17 and 19 connected electrically with lead wire 22, i.e., the conductive member, are reattached to stator 10, as shown in Fig. 6. By using LCR meter 60, the measurement is made of the electrostatic capacitance between the bracket and stator core connecting metal 62 connected electrically to stator core 11 for the capacitance measurement. The following conditions are used in the measurement of the electrostatic capacitance. A measuring frequency is 10 kHz. A measuring temperature is 20°C. A voltage level is IV.

Brushless motors are made by combining rotary body samples A1 to A4 and stator assembly samples B1 to B4 described above. Shaft voltages are measured on the brushless motors made to have various electrostatic capacitances. The bearings used are Part No. 608 made by Minebea Co., Ltd. Grease used for the bearing has a consistency rating of 239.

Described next pertains to a method of measuring a shaft voltage of the brushless motor having various electrostatic capacitances in the embodied sample 1.

Fig. 8 is an explanatory drawing showing the method for measuring the shaft voltage appearing in the motor according to the first exemplary embodiment. As shown in Fig. 8, the shaft voltage is measured while brushless motor 100 is driven with shaft 16 in a horizontal orientation. Every measurement of the shaft voltage is carried out under the following same operating conditions by using a regulated DC power supply. A supply voltage Vdc to the stator winding is 391V, a supply voltage Vcc to the control circuit is 15V, and a rotating speed of the rotor is 1,000 rpm. The rotating speed of the rotor is adjusted by regulating control voltage Vsp.

The shaft voltage is measured by observing a voltage waveform.

The measurement of the shaft voltage is carried out by using oscilloscope 130 and probe 120, as shown in Fig. 8. Oscilloscope 130 is isolated by isolation transformer 140. Oscilloscope 130 used here is a digital oscilloscope, Model DPO7104 manufactured by Tektronix Inc. For probe 120, a high voltage differential probe, Model P5205 made by Tektronix Inc. is used.

Description is given next of a method of measuring a shaft voltage of the bearing located on the output-shaft side.

As shown in Fig. 8, positive-side probe 120a has lead wire 110, a length of which is about 30 cm. One end of lead wire 110 carries a bare conductor. The bare conductor at the end of lead wire 110 is formed into a loop of about 15 mm in diameter. The loop-formed conductor has its inner surface in conductive contact with an outer surface of shaft 16. As a result, positive-side probe 120a is electrically connected with shaft 16.

Negative-side probe 120b has lead wire 111 of about 30 cm in length. One end of lead wire 111 is in conductive contact with bracket 17. This end of lead wire 111 is fixed to bracket 17 with electrically conductive tape 112. As a result, negative-side probe 120b is electrically connected with bracket 17.

A voltage induced between shaft 16 and bracket 17 was measured in the above configuration. This voltage is the shaft voltage of bearing 15a located on the output-shaft side.

Description is provided next of a method of measuring a shaft voltage of the bearing located on the anti-output-shaft side.

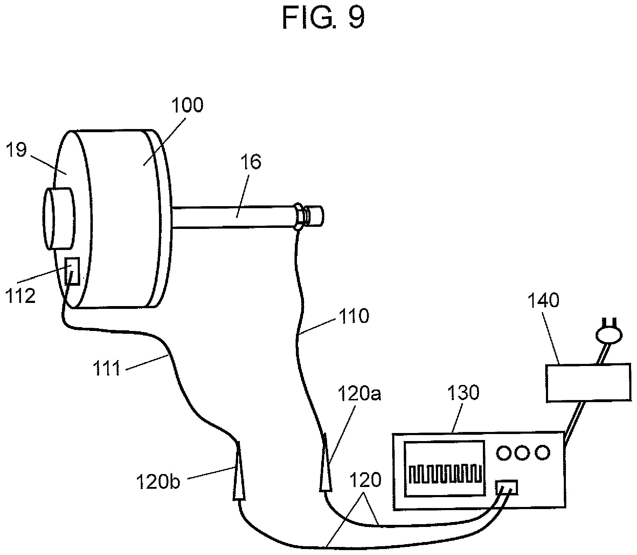

As shown in Fig. 9, positive-side probe 120a has lead wire 110, a length of which is about 30 cm. One end of lead wire 110 carries a bare conductor. The bare conductor at the end of lead wire 110 is formed into a loop of about 15 mm in diameter. The loop-formed conductor has its inner surface in conductive contact with the outer surface of shaft 16. As a result, positive-side probe 120a is electrically connected with shaft 16.

Negative-side probe 120b has lead wire 111 of about 30 cm in length. Brushless motor 100 has a part of its resin portion scraped off, and a part of bracket 19 exposed. One end of lead wire 111 is in conductive contact with the exposed portion of bracket 19. This end of lead wire 111 is fixed to bracket 19 with electrically conductive tape 112. As a result, negative-side probe 120b is electrically connected with bracket 19.

A voltage induced between shaft 16 and bracket 19 was measured in the above configuration. This voltage is the shaft voltage of bearing 15b located on the anti-output-shaft side.

First, measurement of the shaft voltage is made by observing a voltage waveform. In this observation of the voltage waveform, confirmation is made as to whether or not a distortion occurs in the voltage waveform. Waveform distortions are classified into three classes that are "completely distorted wave", "partially distorted wave" and "undistorted wave".

Next, the measurement of the shaft voltage is to read a peak-to-peak voltage from the observed voltage waveform, and take it as a value of the shaft voltage.

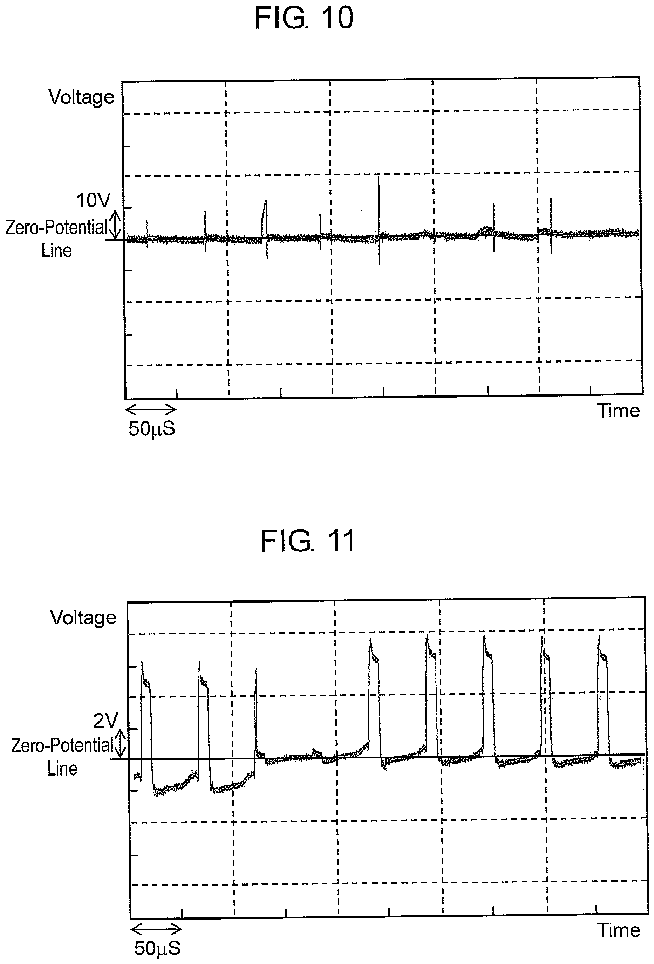

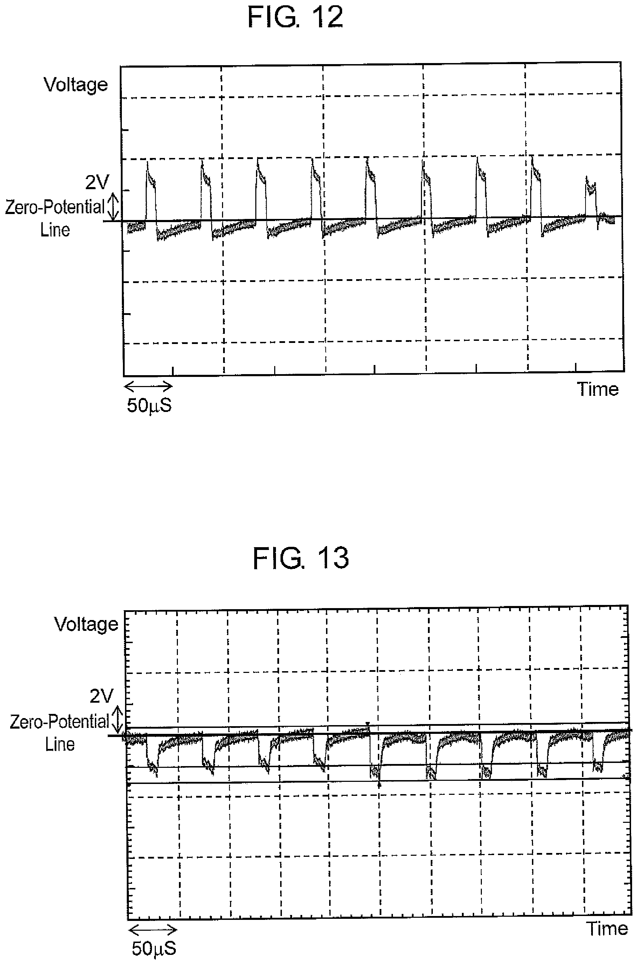

Some examples of measured voltage waveforms are shown by using Fig. 10 to Fig. 12. Fig. 10 is a waveform chart showing a completely distorted wave, as one example of the voltage waveform measured with the motor according to the first exemplary embodiment. Fig. 11 is a waveform chart showing a partially distorted wave, as another example of the voltage waveform measured with the motor of the first embodiment. Fig. 12 is a waveform chart showing an undistorted wave, as still another example of the voltage waveform measured with the motor of the first embodiment.

In the voltage waveform charts shown in Fig. 10 to Fig. 12, the time indicated on the horizontal axis has a scale of 50 µs/div.

In the voltage waveform charts shown in Fig. 10 to Fig. 12, directions of electric currents have been determined based on directions of the voltage waveforms.

The voltage waveforms given in Fig. 10 to Fig. 12 lie above the zero-potential lines in the charts. It is understood from this fact that the electric potential of shaft 16, that is on the inner ring side of the bearings, is higher than the electric potential of bracket 17 or bracket 19, that is on the outer ring side of the bearings. In other words, it can be determined that the electric current flows from the inner ring side to the outer ring side of the bearings.

Fig. 13 shows a comparative example for the purpose of comparing the directions of the electric currents.

The voltage waveform shown in Fig. 13 lies under the zero-potential line in the chart. It can be determined here that the electric current flows from the outer ring side to the inner ring side of the bearings.

Brushless motors constructed of various combinations have been prepared to verify the effectiveness of suppressing the electrolytic corrosion on the specifications discussed above. Endurance tests to electrolytic corrosion have been performed as described below on the prepared brushless motors.

The endurance tests to electrolytic corrosion are as follows. A supply voltage Vdc to the stator windings is 391V, a supply voltage Vcc to the control circuits is 15V, and a rotating speed of the rotors is 1,000 rpm. The rotating speed of the rotors is adjusted by regulating control voltage Vsp. The brushless motors under the test are rotated with their shafts in a horizontal orientation. The brushless motors are rotated in an ambient temperature of 10°C. The test is continued by rotating the brushless motors under no load condition for 10,000 hours.

Determination of electrolytic corrosion is so made that the useful life is reached due to the electrolytic corrosion upon confirmation of audible abnormalities and wavy wear found in the bearings.

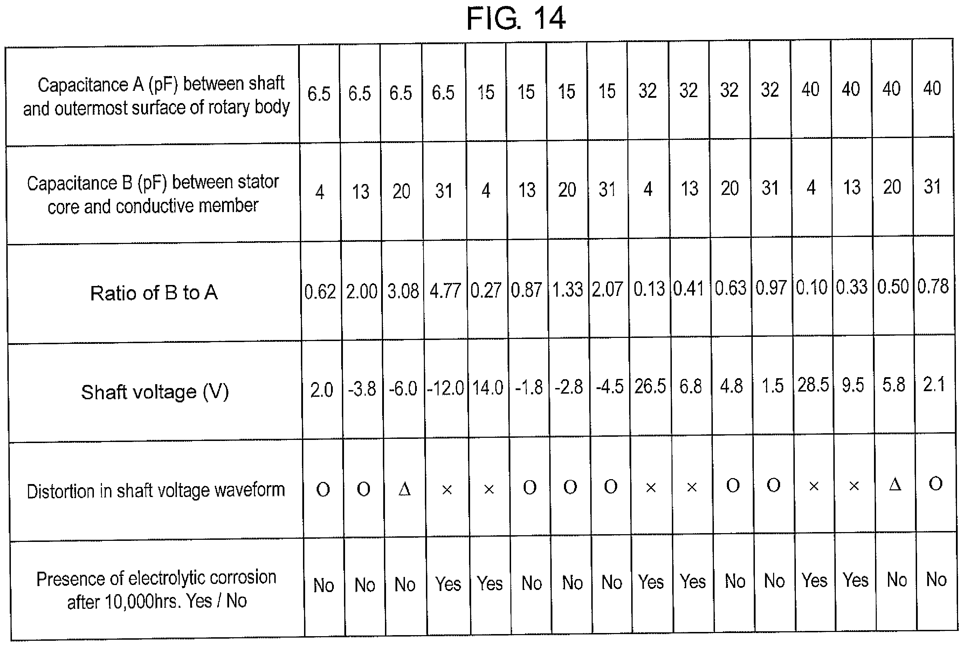

Fig. 14 shows a result of evaluation on the embodied samples 1 detailed above.

The electrostatic capacitance formed between shaft 16 and outermost surfaces 32a at the farthest outer periphery from the axial center of rotary body 30 is defined as capacitance A. The electrostatic capacitance formed between stator core 11 and lead wire 22, or the conductive member, is defined as capacitance B.

A partially distorted wave was confirmed on the measured voltage waveform when the measuring frequency is 10 kHz, and the relation between A and B is 0.50A = B or B = 3.08A. Electrolytic corrosion had not been formed in the bearings, however, even after the rotation test of 10,000 hours.

No distortion was observed on the measured voltage waveform when the measuring frequency is 10 kHz, and the relation between A and B satisfies 0.50A < B < 3.08A, and more specifically the relation satisfies 0.62A ≤ B ≤ 2.07A. In addition, there was not any electrolytic corrosion formed in the bearings even after the rotation test of 10,000 hours.

The following result is derived obviously from the above facts. That is, development of the electrolytic corrosion can be suppressed in the bearings when the measuring frequency is 10 kHz and the relation between A and B satisfies 0.50A ≤ B ≤ 3.08A.

A more preferable relation between electrostatic capacitance A and electrostatic capacitance B is 0.62A ≤ B ≤ 2.07A at the measuring frequency of 10 kHz. Development of the electrolytic corrosion can be suppressed in the bearings without causing distortion in the voltage waveform when this relation is satisfied.

The reason of this is due to the following factors. Brackets 17 and 19 become to be in state of the same electrical potentials, thereby unbalance in the electrical potentials is suppressed. This reduces the shaft voltage, and prevents the oil films present in the bearings from suffering an insulation breakdown.

Furthermore, the frequency of causing the waveform distortion decreases when the shaft voltage is reduced, since the chances of an insulation breakdown of the oil films present in the bearings also decreases. It thus becomes possible to suppress development of the electrolytic corrosion in the bearings.

As is obvious from these results, the motor in this exemplary embodiment of the invention achieves a lower shaft voltage than that of conventional motors, and is therefore capable of suppressing development of the electrolytic corrosion in the bearings provided in the motor.

### SECOND EXEMPLARY EMBODIMENT

Description is provided of an electric apparatus equipped with the motor described in the first exemplary embodiment of this invention by giving a concrete example.

Described first is a case in which the motor is used for an indoor unit of an air conditioner, as the second exemplary embodiment of this invention.

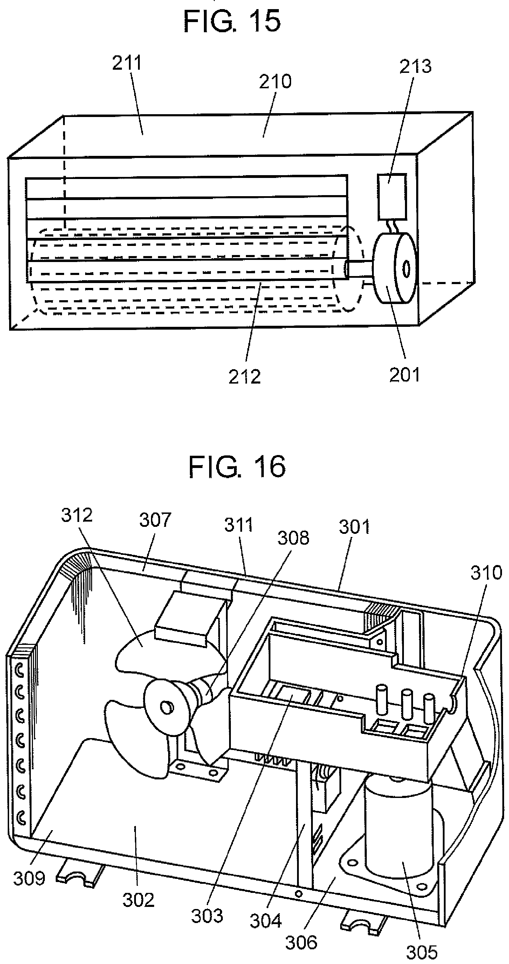

As shown in Fig. 15, indoor unit 210 of an air conditioner includes motor 201 inside enclosure 211. Motor 201 has cross-flow fan 212 attached to an output-shaft side of a rotary shaft as a load. Indoor unit 210 of the air conditioner includes motor drive unit 213 inside enclosure 211, as a driving unit for driving motor 201. Motor 201 is driven by motor drive unit 213. Motor 201 rotates according to a driving signal from motor drive unit 213. When motor 201 rotates, cross-flow fan 212 also rotates. The rotation of cross-flow fan 212 delivers air into a room after the air is conditioned by a heat exchanger in the indoor unit.

### THIRD EXEMPLARY EMBODIMENT

Description is provided next of another case in which the motor described in the above first exemplary embodiment is used for an outdoor unit of an air conditioner, as the third exemplary embodiment of the invention.

As shown in Fig. 16, outdoor unit 301 of an air conditioner includes motor 308 inside enclosure 311. Motor 308 has fan 312 attached to an output-shaft side of a rotary shaft as a load. Motor 308 functions as an air-blower motor. Outdoor unit 301 of the air conditioner has bulkhead 304 on base plate 302 inside enclosure 311. A space in outdoor unit 301 of the air conditioner is divided into compressor room 306 and heat exchanger room 309 by bulkhead 304. Compressor 305 is disposed in compressor room 306. Heat exchanger 307 and motor 308 for functioning as the air-blower motor are disposed in heat exchanger room 309. Electrical component box 310 is placed on an upper section of bulkhead 304. Motor drive unit 303 serving as a driving unit for driving motor 308 is disposed inside electrical component box 310. Motor 308 is driven by motor drive unit 303. Motor 308 rotates according to a driving signal from motor drive unit 303. When motor 308 rotates, fan 312 also rotates. Air flows into heat exchanger room 309 through heat exchanger 307 when fan 312 rotates.

### FOURTH EXEMPLARY EMBODIMENT

Description is provided next of another case in which the motor described in the above first exemplary embodiment is used for a water heater, as the fourth exemplary embodiment of the invention.

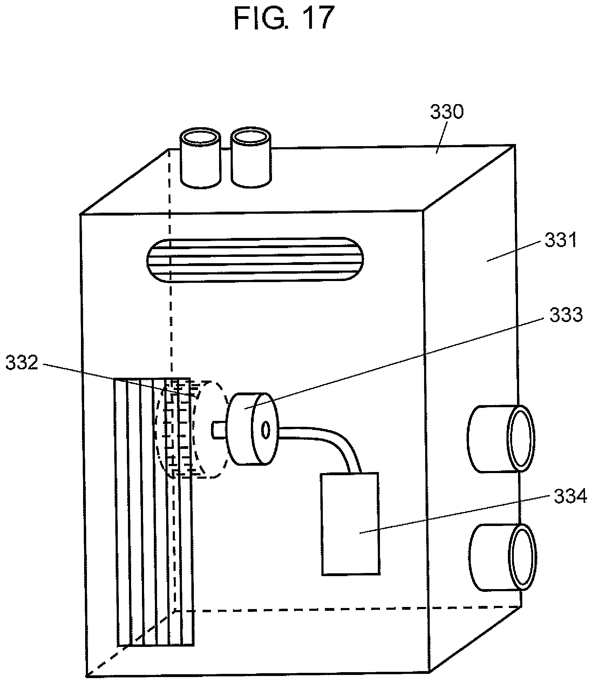

As shown in Fig. 17, water heater 330 includes motor 333 inside enclosure 331. Motor 333 has fan 332 attached to an output-shaft side of a rotary shaft as a load. Water heater 330 includes motor drive unit 334 inside enclosure 331, as a driving unit for driving motor 333. Motor 333 is driven by motor drive unit 334. Motor 333 rotates according to a driving signal from motor drive unit 334. When motor 333 rotates, fan 332 also rotates. The rotation of fan 332 delivers air necessary for combustion into a fuel vaporization chamber.

### FIFTH EXEMPLARY EMBODIMENT

Description is provided next of still another case in which the motor described in the above first exemplary embodiment is used for an air cleaner, as the fifth fourth exemplary embodiment of the invention.

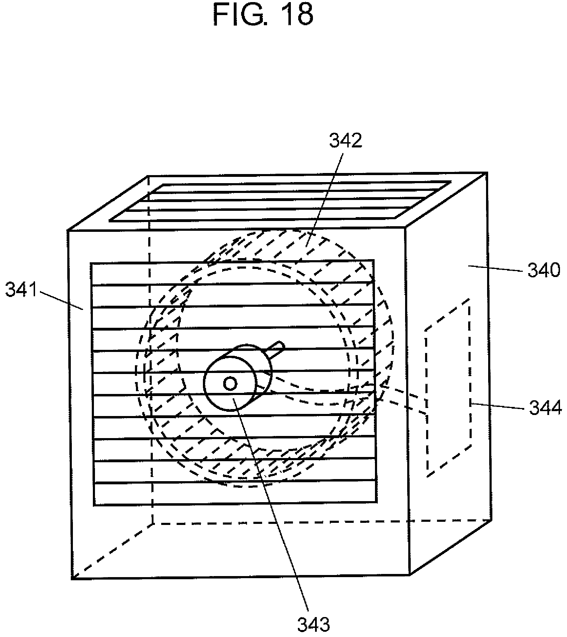

As shown in Fig. 18, air cleaner 340 includes motor 343 inside enclosure 341. Motor 343 has air circulation fan 342 attached to an output-shaft side of a rotary shaft as a load. Air cleaner 340 includes motor drive unit 344 inside enclosure 341, as a driving unit for driving motor 343. Motor 343 is driven by motor drive unit 344. Motor 343 rotates according to a driving signal from motor drive unit 344. When motor 343 rotates, air circulation fan 342 also rotates. The rotation of air circulation fan 342 circulates the air in a room where air cleaner 340 is installed.

The indoor unit and the outdoor unit of air conditioner, the water heater and the air cleaner have been illustrated in the above descriptions as specific examples of the electric apparatuses for which the motor shown in the first exemplary embodiment of the present invention is applicable. However, the motor shown in the first exemplary embodiment of this invention is also useful as a motor used in other apparatuses such as household electric appliances, various information processing devices and industrial equipment.

As has been described, the structure according to the exemplary embodiment of the present application is so configured that the power supply circuit used for the drive circuit that inverter-drives the motor with the PWM method, the primary circuit constituting the power supply circuit, and another circuit that establishes grounding by electrically connecting the primary circuit to the earth are electrically isolated with respect to one another. The drive circuit for driving the inverter includes a control circuit and the like.

Accordingly, the invented structure can provide a noble advantage of suppressing electrolytic corrosion in the bearings without even adopting such a configuration as the conventional art that the stator core and the like components contained in the motor are electrically connected to the earth for grounding.

The motor of the present invention is most suitable for suppressing development of electrolytic corrosion in the bearings since it can decrease the shaft voltage. The motor is therefore useful for application to such electric apparatuses, of which reduction in cost and prolongation in longevity of the motor are desired. An indoor unit and outdoor unit of air conditioner, a water heater, and an air cleaner are examples of such electric apparatuses.

## Claims

1. A motor (100) comprising:
a stator (10) including a winding (12) and a stator core (11) having the winding (12) wound thereon;
a rotor (14) including a rotary body (30) having a permanent magnet (32) disposed in a circumferential direction and confronting the stator (10), and a shaft (16) penetrating through an axial center of the rotary body (30) and fixed to the rotary body (30);
a pair of bearings (15a, 15b) supporting the shaft (16);
a pair of brackets (17, 19) having electrical conductivity, and holding the pair of bearings (15a, 15b) fixed thereto; and
a conductive member electrically connecting the pair of brackets (17, 19),
wherein the motor (100) satisfies a relation of 0.50A ≤ B ≤ 3.08A at a measuring frequency of 10 kHz, where A denotes an electrostatic capacitance formed between the shaft (16) and an outermost surface of the rotary body (30) at a farthest outer periphery from the axial center, and B denotes an electrostatic capacitance formed between the stator core (11) and the conductive member;
**characterized in that**:
the conductive member is a lead wire (22), the lead wire (22) including a metal wire (22d) and a film coating (22c) of an insulating material with which the metal wire (22d) is covered.

2. The motor (100) according to claim 1,
wherein the motor (100) satisfies a relation of 0.62A ≤ B ≤ 2.07A at a measuring frequency of 10 kHz, where A denotes an electrostatic capacitance formed between the shaft (16) and an outermost surface of the rotary body (30) at a farthest outer periphery from the axial center, and B denotes an electrostatic capacitance formed between the stator core (11) and the conductive member.

3. The motor (100) according to claim 1 or 2, wherein at least one of the pair of brackets (17, 19) is integrally molded with the stator core (11) by an insulation resin (13).

4. The motor according to claim 1 or 2, wherein the conductive member is in contact with the stator core (11), and is integrally molded by an insulation resin (13).

5. The motor (100) according to claim 1 or 2, wherein the rotary body (30) includes a dielectric layer (50) disposed between the shaft (16) and an outer peripheral portion having a peripheral surface that is parallel to a direction of the axial center of the rotary body (30) and forms an outer periphery of the rotary body (30).

6. An electric apparatus comprising a motor (100) according to claim 1 or 2, and a driving unit for driving the motor (100).

## Patentansprüche

1. Motor (100), der Folgendes umfasst:
einen Stator (10), der eine Wicklung (12) und einen Statorkern (11), um den die Wicklung (12) gewickelt ist, enthält;
einen Rotor (14), der einen Drehkörper (30), der einen Permanentmagneten (32), der in einer Umfangsrichtung angeordnet ist und dem Stator (10) gegenübersteht, und eine Welle (16), die ein axiales Zentrum des Drehkörpers (30) durchdringt und am Drehkörper (30) befestigt ist, enthält;
ein Paar Lager (15a, 15b), die die Welle (16) tragen;
ein Paar Haltebügel (17, 19), das eine elektrische Leitfähigkeit besitzt und das Paar Lager (15a, 15b), das an ihm befestigt ist, hält; und
ein leitendes Element, das das Paar Haltebügel (17, 19) elektrisch verbindet, wobei
der Motor (100) bei einer Messfrequenz von 10 kHz die Beziehung 0,50 A ≤ B ≤ 3,08 A erfüllt, wobei A eine elektrostatische Kapazität, die zwischen der Welle (16) und einer äußersten Oberfläche des Drehkörpers (30) bei einem vom axialen Zentrum am weitesten entfernten Außenumfang gebildet ist, bezeichnet und B eine elektrostatische Kapazität, die zwischen dem Statorkern (11) und dem leitenden Element gebildet ist, bezeichnet;
**dadurch gekennzeichnet, dass**
das leitende Element ein Leitungsdraht (22) ist, wobei der Leitungsdraht (22) einen Metalldraht (22d) und eine Filmbeschichtung (22c) aus einem Isolationsmaterial, mit dem der Metalldraht (22d) überzogen ist, enthält.

2. Motor (100) nach Anspruch 1, wobei
der Motor (100) bei einer Messfrequenz von 10 kHz die Beziehung 0,62 A ≤ B ≤ 2,07 A erfüllt, wobei A eine elektrostatische Kapazität, die zwischen der Welle (16) und einer äußersten Oberfläche des Drehkörpers (30) bei einem vom axialen Zentrum am weitesten entfernten Außenumfang gebildet ist, bezeichnet und B eine elektrostatische Kapazität, die zwischen dem Statorkern (11) und dem leitenden Element gebildet ist, bezeichnet.

3. Motor (100) nach Anspruch 1 oder 2, wobei mindestens einer des Paares Haltebügel (17, 19) durch ein Isolierharz (13) mit dem Statorkern (11) einteilig ausgebildet ist.

4. Motor (100) nach Anspruch 1 oder 2, wobei das leitende Element in Kontakt mit dem Statorkern (11) steht und durch ein Isolierharz (13) einteilig gestaltet ist.

5. Motor (100) nach Anspruch 1 oder 2, wobei der Drehkörper (30) eine dielektrische Schicht (50) enthält, die zwischen der Welle (16) und einem Außenumfangsabschnitt, der eine Umfangsfläche besitzt, die zu einer Richtung des axialen Zentrums des Drehkörpers (30) parallel ist und einen Außenumfang des Drehkörpers (30) bildet, angeordnet ist.

6. Elektrische Vorrichtung, die den Motor (100) nach Anspruch 1 oder 2 und eine Ansteuereinheit zum Ansteuern des Motors (100) umfasst.

## Revendications

1. Moteur (100), comprenant :
un stator (10) incluant un enroulement (12) et un noyau de stator (11) ayant l'enroulement (12) enroulé sur celui-ci ;
un rotor (14) incluant un corps rotatif (30) ayant un aimant permanent (32) disposé dans une direction circonférentielle et faisant face au stator (10), et un arbre (16) pénétrant à travers un centre axial du corps rotatif (30) et fixé au corps rotatif (30) ;
une paire de paliers (15a, 15b) supportant l'arbre (16) ;
une paire de supports (17, 19) ayant une conductivité électrique, et maintenant la paire de paliers (15a, 15b) fixés à ceux-ci ; et
un élément conducteur connectant électriquement la paire de supports (17, 19),
dans lequel le moteur (100) satisfait à une relation de 0,50A ≤ B ≤ 3,08A à une fréquence de mesure de 10 kHz, où A indique une capacitance électrostatique formé entre l'arbre (16) et une surface la plus extérieure du corps rotatif (30) à une périphérie extérieure la plus éloignée du centre axial, et B indique une capacitance électrostatique formée entre le noyau de stator (11) et l'élément conducteur ;
**caractérisé en ce que** :
l'élément conducteur est un fil conducteur (22), le fil conducteur (22) incluant un fil métallique (22d) et un revêtement sous forme de film (22c) d'un matériau isolant avec lequel le fil métallique (22d) est couvert.

2. Moteur (100) selon la revendication 1,
dans lequel le moteur (100) satisfait à une relation de 0,62A ≤ B ≤ 2,07A à une fréquence de mesure de 10 kHz, où A indique une capacitance électrostatique formée entre l'arbre (16) et une surface la plus extérieure du corps rotatif (30) à une périphérie extérieure la plus éloignée du centre axial, et B indique une capacitance électrostatique formée entre le noyau de stator (11) et l'élément conducteur.

3. Moteur (100) selon la revendication 1 ou 2, dans lequel au moins un de la paire de supports (17, 19) est moulé de façon monobloc avec le noyau de stator (11) par une résine isolante (13).

4. Moteur selon la revendication 1 ou 2, dans lequel l'élément conducteur est en contact avec le noyau de stator (11), et est moulé de façon monobloc par une résine isolante (13).

5. Moteur (100) selon la revendication 1 ou 2, dans lequel le corps rotatif (30) inclut une couche diélectrique (50) disposée entre l'arbre (16) et une partie périphérique extérieure ayant une surface périphérique qui est parallèle à une direction du centre axial du corps rotatif (30) et forme une périphérie extérieure du corps rotatif (30).

6. Appareil électrique, comprenant un moteur (100) selon la revendication 1 ou 2, et une unité d'excitation pour exciter le moteur (100).
